# EUROPÄISCHE PATENTSCHRIFT

(11) **EP 1 521 926 B1**
(45) Veröffentlichungstag und Bekanntmachung des Hinweises auf die Patenterteilung: **29.05.2013**
(21) Anmeldenummer: 03763726.1
(22) Anmeldetag: 07.07.2003
(51) Int. Cl.: F16H 3/66

(54) **MEHRSTUFENGETRIEBE**
MULTI-STEP TRANSMISSION
BOITE DE VITESSES A PLUSIEURS ETAGES

(30) Priorität: 11.07.2002 DE 10231349
(43) Veröffentlichungstag der Anmeldung: 13.04.2005
(73) Patentinhaber: ZF FRIEDRICHSHAFEN Aktiengesellschaft, 88038 Friedrichshafen (DE)
(72) Erfinder: GUMPOLTSBERGER, Gerhard, 88045 Friedrichshafen (DE)
(86) Internationale Anmeldenummer: PCT/EP2003/007242
(87) Internationale Veröffentlichungsnummer: WO 2004/007998

(56) Entgegenhaltungen:
- EP-A- 0 434 525
- DE-A- 19 912 480
- DE-A- 19 949 507
- US-A- 4 683 776
- US-A- 6 053 839
- US-A- 6 139 463

## Beschreibung

Die vorliegende Erfindung betrifft ein Mehrstufengetriebe in Planetenbauweise, insbesondere ein Automatgetriebe für ein Kraftfahrzeug gemäß dem Oberbegriff des Patentanspruchs 1.

Automatgetriebe, insbesondere für Kraftfahrzeuge, umfassen nach dem Stand der Technik Planetensätze, die mittels Reibungs- bzw. Schaltelementen wie etwa Kupplungen und Bremsen geschaltet werden und üblicherweise mit einem einer Schlupfwirkung unterliegenden und wahlweise mit einer Überbrückungskupplung versehenen Anfahrelement wie etwa einem hydrodynamischen Drehmomentwandler oder einer Strömungskupplung verbunden sind.

Ein derartiges Getriebe geht aus der EP 0 434 525 A1 hervor. Es umfasst im wesentlichen eine Antriebswelle und eine Abtriebswelle, die parallel zueinander angeordnet sind, einen konzentrisch zur Abtriebswelle angeordneten Doppelplanetenradsatz und fünf Schaltelemente in der Form von drei Kupplungen und zwei Bremsen, deren wahlweise Sperrung jeweils paarweise die verschiedenen Gangübersetzungen zwischen der Antriebswelle und der Abtriebswelle bestimmt. Hierbei weist das Getriebe einen Vorschaltradsatz und zwei Leistungswege auf, so dass durch das selektive paarweise Eingreifen der fünf Schaltelemente sechs Vorwärtsgänge erzielt werden.

Hierbei werden bei dem ersten Leistungsweg zwei Kupplungen zur Über tragung des Drehmomentes vom Vorschaltradsatz zu zwei Elementen des Doppelptanetenradsatzes benö tigt. Diese sind in Kraftflussrichtung im wesentlichen hinter dem Vorschaltradsatz in Richtung Doppelplanetenradsatz angeordnet. Bei dem zweiten Leistungsweg ist eine weitere Kupplung vorgesehen, die diesen mit einem weiteren Element des Doppelplanetenradsatzes lösbar verbindet. Hierbei sind die Kupplungen derart angeordnet, dass der Innenlammelenträger den Abtrieb bildet.

Des weiteren ist aus der Druckschrift US 6,139,463 ein kompaktes Mehrstufengetriebe in Planetenbauweise, insbesondere für ein Kraftfahrzeug bekannt, welches zwei Planetenradsätze und einen Vorschaltradsatz sowie drei Kupplungen und drei Bremsen aufweist. Bei diesem bekannten Mehrstufengetriebe sind bei einem ersten Leistungsweg zwei Kupplungen C-1 und C-3 zum Übertragen des Drehmoments vom Vorschaltradsatz zu den beiden Planetenradsätzen vorgesehen. Hierbei ist der Außenlamellenträger bzw. die Zylinder- bzw. Kolben- und Druckausgleichsseite der Kupplung C-3 mit einer ersten Bremse B-1 verbunden. Zudem ist der Innenlamellenträger der dritten Kupplung C-3 mit der Zylinder- bzw. Kolben- und Druckausgleichsseite der ersten Kupplung C-1 verbunden, wobei der Innenlamellenträger der ersten Kupplung C-1 abtriebsseitig angeordnet ist und mit einem Sonnenrad des dritten Planetenradsatzes verbunden ist.

Des weiteren ist aus der DE 199 49 507 A1 der Anmelderin ein Mehrstufengetriebe bekannt, bei dem an der Antriebswelle zwei nicht schaltbare Vorschaltradsätze vorgesehen sind, die ausgangsseitig zwei Drehzahlen erzeugen, die neben der Drehzahl der Antriebswelle wahlweise auf einen auf die Abtriebswelle wirkenden, schaltbaren Doppelplanetenradsatz durch selektives Schließen der verwendeten Schaltelemente derart schaltbar sind, dass zum Umschalten von einem Gang in den jeweils nächst folgenden höheren oder niedrigeren Gang von den beiden gerade betätigten Schaltelementen jeweils nur ein Schaltelement zu- oder abgeschaltet werden muss.

Des weiteren ist aus der DE 199 12 480 A1 ein automatisch schaltbares Krattfahrzeuggetriebe mit drei Einsteg-Planetensätzen sowie drei Bremsen und zwei Kupplungen zum Schalten von sechs Vorwärtsgängen und einem Rückwärtsgang und mit einer Antriebs- sowie einer Abtriebswelle bekannt. Das automatisch schaltbare Kraftfahrzeuggetriebe ist derart ausgebildet, dass die Antriebswelle direkt mit dem Sonnenrad des zweiten Planetensatzes verbunden ist und dass die Antriebswelle über die erste Kupplung mit dem Sonnenrad des ersten Planetensatzes und/oder über die zweite Kupplung mit dem Steg des ersten Planetensatzes verbindbar ist. Zusätzlich oder alternativ ist das Sonnenrad des ersten Planetensatzes über die erste Bremse mit dem Gehäuse des Getriebes und/oder der Steg des ersten Planetensatzes über die zweite Bremse mit dem Gehäuse und/oder dem Sonnenrad des dritten Planetensatzes über die dritte Bremse mit dem Gehäuse verbindbar.

Aus der US 4 683 776 A, die die Merkmale des Oberbegriffs des Anspruchs 1 zeigt, ist ein Planetensatz für ein Automobilgetriebe bekannt, welches vier Planetenradsätze zwei Kupplungen und vier Bremsen aufweist. Hierbei ist bei dem vierten Planetenradsatz ein Sonnenrad über eine Kupplung mit einer Eingangswelle lösbar verbunden, ein Planetenträger mit einer vierten Bremse lösbar verbunden sowie ein Hohlrad mit einem Planetenträger und mit einem Hohlrad von zwei anderen der Planetenradsätze lösbar verbunden, wodurch neun Vorwärts- und ein Rückwärtsgang realisiert werden.

Der vorliegenden Erfindung liegt die Aufgabe zugrunde, ein Mehrstufengetriebe der eingangs genannten Art vorzuschlagen, bei dem der Bauaufwand optimiert wird und zudem der Wirkungsgrad in den Hauptfahrgängen hinsichtlich der Schlepp- und Verzahnungsverluste verbessert wird. zudem sollen bei dem erfindungsgemäßen Mehrstufengetriebe geringe Momente auf die Schaltelemente und Planetensätze wirken sowie die Drehzahlen der Wellen, Schaltelemente und Planetensätze möglicht gering gehalten werden. Des weiteren soll

Gemäß der vorliegenden Erfindung ist bei dem Mehrstufenschaltgetriebe vorgesehen, dass der Antrieb durch die Antriebswelle erfolgt, welche ständig mit einem Element des ersten Planetensatzes verbunden ist, wobei ein weiteres Element des ersten Planetensatzes ständig mit dem Gehäuse verbunden ist und dass der Abtrieb über die Abtriebswelle erfolgt, welche mit dem Steg des zweiten Planetensatzes und dem Hohlrad des dritten Planetensatzes verbunden ist. Des weiteren ist bei dem erfindungsgemäßen Mehrstufengetriebe vorgesehen, dass eine zweite Welle ständig mit dem Steg des dritten Planetensatzes verbunden ist, dass eine dritte Welle ständig mit dem Hohlrad des zweiten Planetensatzes verbunden ist, dass eine vierte Welle ständig mit dem Hohlrad des ersten Planetensatzes verbunden ist, dass eine fünfte Welle ständig mit dem Sonnenrad des zweiten Planetensatzes verbunden ist, und dass eine sechste Welle ständig mit dem Sonnenrad des dritten Planetensatzes verbunden ist, wobei die Planetensätze mit Wellen und Schaltelementen gekoppelt sind. Hierbei kann erfindungsgemäß die Antriebswelle entweder mit dem Steg oder mit dem Sonnenrad des ersten Planetensatzes verbunden sein, wobei dementsprechend die feste Verbindung des ersten Planetensatzes zum Gehäuse über das Sonnenrad oder den Steg des ersten Planetensatzes erfolgt.

Der zweite Planetensatz und der dritte Planetensatz sind erfindungsgemäß als Minus-Planetensätze ausgebildet; der erste Planetensatz ist ein Plus-Planetensatz.

Durch die erfindungsgemäße Ausgestaltung des Mehrstufengetriebes ergeben sich geeignete Übersetzungen sowie eine erhebliche Erhöhung der Gesamtspreizung des Mehrstufengetriebes, wodurch eine Verbesserung des Fahrkomforts und eine signifikante Verbrauchsabsenkung bewirkt werden.

Das erfindungsgemäße Mehrstufengetriebe eignet sich für jedes Kraftfahrzeug, insbesondere für Personenkraftfahrzeuge und für Nutzkraftfahrzeuge, wie z. B. Lastkraftwagen, Busse, Baufahrzeuge, Schienenfahrzeuge, Gleiskettenfahrzeuge und dergleichen.

Darüber hinaus wird mit dem erfindungsgemäßen Mehrstufengetriebe durch eine geringe Anzahl an Schaltelementen, vorzugsweise fünf Kupplungen und einer oder zwei Bremsen, der Bauaufwand erheblich reduziert. In vorteilhafter Weise ist es mit dem erfindungsgemäßen Mehrstufengetriebe möglich, ein Anfahren mit einem hydrodynamischen Wandler, einer externen Anfahrkupplung oder auch mit sonstigen geeigneten externen Anfahrelementen durchzuführen. Es ist auch denkbar, einen Anfahrvorgang mit einem im Getriebe integrierten Anfahrelement zu ermöglichen. Vorzugsweise eignet sich ein Schaltelement, welches im ersten Gang und in den Rückwärtsgängen betätigt wird.

Darüber hinaus ergibt sich bei dem erfindungsgemäßen Mehrstufengetriebe ein guter Wirkungsgrad in den Hauptfahrgängen bezüglich der Schlepp-und Verzahnungsverluste.

Des weiteren liegen geringe Momente in den Schaltelementen und in den Planetensätzen des Mehrstufengetriebes vor, wodurch der Verschleiß bei dem Mehrstufengetriebe in vorteilhafter Weise reduziert wird. Ferner wird durch die geringen Momente eine entsprechend geringe Dimensionierung ermöglicht, wodurch der benötigte Bauraum und die entsprechenden Kosten reduziert werden. Darüber hinaus liegen auch geringe Drehzahlen bei den Wellen, den Schaltelementen und den Planetensätzen vor.

Außerdem ist das erfindungsgemäße Getriebe derart konzipiert, dass eine Anpassbarkeit an unterschiedliche Triebstrangausgestaltungen sowohl in Kraftflussrichtung als auch in räumlicher Hinsicht ermöglicht wird.

Die Erfindung wird im folgenden anhand der Zeichnungen beispielhaft näher erläutert.
In diesen stellen dar:
- Fig. 1: eine schematische Ansicht einer bevorzugten Ausführungsform eines erfindungsgemäßen Mehrstufengetriebes;
- Fig. 2: eine schematische Ansicht einer weiteren bevorzugten Ausführungsform eines erfindungsgemäßen Mehrstufengetriebes;
- Fig. 3: ein Schaltschema für das erfindungsgemäße Mehrstufengetriebe gemäß Fig. 1 und Fig: 2;
- Fig. 4: eine schematische Ansicht einer weiteren bevorzugten Ausführungsform eines erfindungsgemäßen Mehrstufengetriebes und
- Fig. 5: eine schematische Ansicht einer weiteren bevorzugten Ausführungsform eines erfindungsgemäßen Mehrstufengetriebes.

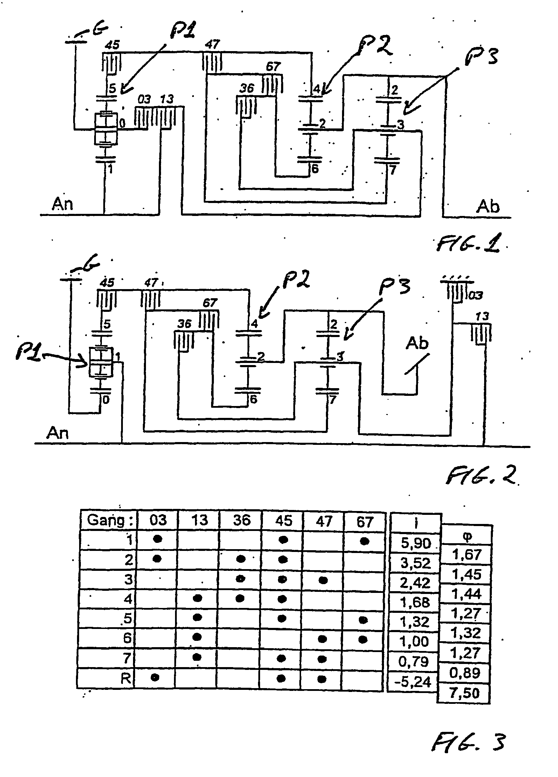

In den Fig. 1 und 2 ist das erfindungsgemäße Mehrstufengetriebe mit einer Antriebswelle 1 (An) und einer Abtriebswelle 2 (Ab) dargestellt, welche in einem Gehäuse G angeordnet sind. Es sind drei Einsteg-Planetensätze P1, P2, P3 vorgesehen. Hierbei sind der zweite Planetensatz P2 und der dritte Planetensatz P3 als Minus-Planetensätze ausgebildet; der erste Planetensatz P1 ist gemäß der Erfindung als Plus-Planetensatz ausgebildet.

Wie aus den Fig. 1 und 2 ersichtlich, sind lediglich sechs Schaltelemente, nämlich eine Bremse 03 sowie fünf Kupplungen 13, 36, 45, 47 und 67 vorgesehen.

Mit den Schaltelementen ist ein selektives Schalten von sieben Vorwärtsgängen und einem Rückwärtsgang realisierbar. Das erfindungsgemäße Mehrstufengetriebe weist gemäß Fig. 1 insgesamt sieben drehbare Wellen auf, nämlich die Antriebswelle 1, die Abtriebswelle 2, die zweite, dritte, vierte, fünfte, sechste Welle 3, 4, 5, 6, 7.

Erfindungsgemäß ist bei dem Mehrstufengetriebe gemäß Fig. 1 vorgesehen, dass der Antrieb durch die Antriebswelle 1 erfolgt, welche ständig mit dem Sonnenrad des ersten Planetensatzes P1 verbunden ist, wobei der Steg des ersten Planetensatzes P1 ständig mit dem Gehäuse G verbunden ist. Der Abtrieb erfolgt über die Abtriebswelle 2, welche mit dem Steg des zweiten Planetensatzes P2 und dem Hohlrad des dritten Planetensatzes P3 verbunden ist. Des weiteren ist die zweite Welle 3 ständig mit dem Steg des dritten Planetensatzes und die dritte Welle 4 ist ständig mit dem Hohlrad des zweiten Planetensatzes P2 verbunden. Darüber hinaus ist die vierte Welle 5 ständig mit dem Hohlrad des ersten Planetensatzes P1 verbunden. Die fünfte drehbare Welle 6 ist erfindungsgemäß ständig mit dem Sonnenrad des zweiten Planetensatzes P2 verbunden, wobei die sechste Welle 7 ständig mit dem Sonnenrad des dritten Planetensatzes P3 verbunden ist.

Bei dem erfindungsgemäßen Mehrstufengetriebe ist die zweite Welle 3 durch die Bremse 03 an das Gehäuse G ankoppelbar. Die erste Kupplung 13 verbindet die Antriebswelle 1 und die zweite Welle 3 lösbar miteinander; die zweite Welle 3 und die fünfte Welle 6 sind über die zweite Kupplung 36 lösbar miteinander verbindbar. Des weiteren verbindet die dritte Kupplung 45 die dritte Welle 4 und die vierte Welle 5 und die vierte Kupplung 47 die dritte Welle 4 und die sechste Welle 7 lösbar miteinander, wobei die fünfte Kupplung 67 dazu vorgesehen ist, die fünfte Welle 6 und die sechste Welle 7 lösbar miteinander zu verbinden.

In Fig. 2 ist eine weitere Ausführungsform des erfindungsgemäßen Mehrstufengetriebes gezeigt. Der einzige Unterschied gegenüber der Ausführungsform gemäß Fig. 1 besteht darin, dass die Welle 1 mit dem Steg des ersten Planetensatzes P1 verbunden ist und dass das Sonnenrad des ersten Planetensatzes P1 ständig mit dem Gehäuse G verbunden ist.

In Fig. 3 ist ein Schaltschema des erfindungsgemäßen Mehrstufengetriebes gemäß den Figuren 1 und 2 dargestellt. Dem Schaltschema können die jeweiligen Übersetzungen i der einzelnen Gangstufen und die daraus zu bestimmenden Stufensprünge ϕ beispielhaft entnommen werden. Des weiteren kann dem Schaltschema entnommen werden, dass bei sequentieller Schaltweise Doppelschaltungen vermieden werden, da zwei benachbarte Gangstufen jeweils zwei Schaltelemente gemeinsam benutzen.

Für den ersten Gang sind die Bremse 03 und die Kupplungen 45 und 67 aktiviert. Der zweite Gang ergibt sich aus der Bremse 03 und den Kupplungen 36 und 45 und der dritte Gang aus den Kupplungen 36, 45 und 47. Beim vierten Gang sind die Kupplungen 13, 36 und 45 aktiviert. Gemäß Fig. 3 ergibt sich der fünfte Gang durch Schließen der Kupplungen 13, 45 und 67; der sechste Gang erfordert die Kombination der Kupplungen 13, 47 und 67. Für den siebten Gang sind die Kupplungen 13, 45 und 47 erforderlich, während sich der Rückwärtsgang durch Schließen der Bremse 03 und der Kupplungen 45 und 47 ergibt.

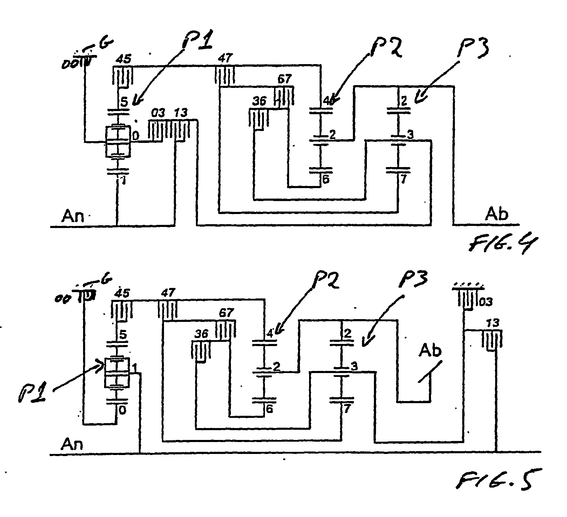

Die feste Verbindung des Sonnenrades beziehungsweise des Stegs des ersten Planetensatzes P1 zum Gehäuse G gemäß Fig. 1 und 2 kann durch eine lösbare Verbindung vorzugsweise mittels einer Bremse ersetzt werden. Dies ist beispielhaft in den Fig. 4 und 5 gezeigt, welche den Ausführungsformen gemäß Fig. 1 bzw. Fig. 2 entsprechen, mit dem Unterschied, dass die Verbindung des Sonnenrades beziehungsweise des Steges des ersten Planetensatzes P1 mit dem Gehäuse G mittels einer Bremse 00 lösbar ausgebildet ist.

Dadurch kann auf die mittels der Bremse 00 gelöste Welle 0 eine E-Maschine oder eine zusätzliche geeignete Antriebsquelle angeordnet werden.

Gemäß der Erfindung ist es möglich, an jeder geeigneten Stelle des Mehrstufengetriebes zusätzliche Freiläufe vorzusehen, beispielsweise zwischen einer Welle und dem Gehäuse oder um zwei Wellen gegebenenfalls zu verbinden.

zudem ist es durch die erfindungsgemäße Bauweise möglich, Antrieb und Abtrieb vorzugsweise für Quer-, Front-Längs-, Heck-Längs- oder Allradanordnungen auf der gleichen Seite des Getriebes bzw. des Gehäuses anzuordnen. Auf der Antriebsseite oder auf der Abtriebsseite können zudem ein Achsdifferential und/oder ein Verteilerdifferential angeordnet werden.

Im Rahmen einer vorteilhaften Weiterbildung kann die Antriebswelle 1 durch ein Kupplungselement von einem Antriebs-Motor nach Bedarf getrennt werden, wobei als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung einsetzbar sind. Es ist auch möglich, ein derartiges Anfahrelement in Kraftflussrichtung hinter dem Getriebe anzuordnen, wobei in diesem Fall die Antriebswelle 1 ständig mit der Kurbelwelle des Motors verbunden ist. Das Anfahren kann gemäß der Erfindung auch mittels eines schaltelements des Getriebes erfolgen. Bevorzugt kann als Anfahrelement die Bremse 03, die sowohl im ersten Vorwärtsgang als auch im ersten Rückwärtsgang aktiviert ist, verwendet werden.

Das erfindungsgemäße Mehrstufengetriebe ermöglicht außerdem die Anordnung eines Torsionsschwingungsdämpfers zwischen Motor und Getriebe.

Im Rahmen einer weiteren, nicht dargestellten Ausführungsform der Erfindung kann auf jeder Welle, bevorzugt auf der Antriebswelle 1 oder der Abtriebswelle 2, eine verschleißfreie Bremse, wie z. B. ein hydraulischer oder elektrischer Retarder oder dergleichen, angeordnet sein, welches insbesondere für den Einsatz in Nutzkraftfahrzeugen von besonderer Bedeutung ist. Des weiteren kann zum Antrieb von zusätzlichen Aggregaten auf jeder Welle, bevorzugt auf der Antriebswelle 1 oder der Abtriebswelle 2, ein Nebenabtrieb vorgesehen sein.

Die eingesetzten Schaltelemente können als lastschaltende Kupplungen oder Bremsen ausgebildet sein. Insbesondere können kraftschlüssige Kupplungen oder Bremsen, wie z. B. Lamellenkupplungen, Bandbremsen und/oder Konuskupplungen, verwendet werden. Des weiteren können als Schaltelemente auch formschlüssige Bremsen und/oder Kupplungen, wie z. B. Synchronisierungen oder Klauenkupplungen eingesetzt werden.

Ein weiterer Vorteil des hier vorgestellten Mehrstufengetriebes besteht darin, dass auf jeder Welle als Generator und/oder als zusätzliche Antriebsmaschine eine elektrische Maschine anbringbar ist.

Die funktionalen Merkmale der Ansprüche können konstruktiv auf verschiedenartigste Weise ausgebildet sein. Der Einfachheit halber sind diese konstruktiven Ausbildungsmöglichkeiten nicht explizit beschrieben. Selbstverständlich fällt jedoch jede konstruktive Ausbildung der Erfindung, insbesondere jede räumliche Anordnung der Planetensätze und der Schaltelemente an sich sowie zueinander und soweit technisch sinnvoll, unter den Schutzumfang der Ansprüche.

### Bezugszeichen

| | |
|---|---|
| 0 | erste Welle |
| 1 | Antriebswelle |
| 2 | Abtriebswelle |
| 3 | zweite Welle |
| 4 | dritte Welle |
| 5 | vierte Welle |
| 6 | fünfte Welle |
| 7 | sechste Welle |
| 00 | weitere Bremse |
| 03 | Bremse |
| 13 | erste Kupplung |
| 36 | zweite Kupplung |
| 45 | dritte Kupplung |
| 47 | vierte Kupplung |
| 67 | fünfte Kupplung |
| | |
| P1 | erster Planetensatz |
| P2 | zweiter Planetensatz |
| P3 | dritter Planetensatz |
| An | Antrieb |
| Ab | Abtrieb |
| i | Übersetzung |
| ϕ | Stüfensprung |
| G | Gehäuse |

## Patentansprüche

1. Mehrstufengetriebe in Planetenbauweise, insbesondere ein Automatgetriebe für ein Kraftfahrzeug, umfassend
- eine Antriebswelle (1) und eine Abtriebswelle (2), welche in einem Gehäuse (G) angeordnet sind,
- drei Einsteg-Planetensätze (P1, P2, P3),
- mindestens fünf weitere drehbare Wellen (3, 4, 5, 6, 7)
- sowie mindestens sechs Schaltelemente (00, 03, 13, 36, 45, 47, 67), umfassend zumindest eine Bremse (00, 03) und Kupplungen (13, 36, 45, 47, 67),
deren selektives Eingreifen verschiedene Übersetzungsverhältnisse zwischen der Antriebswelle (1) und der Abtriebswelle (2) bewirkt, sodass sieben Vorwärtsgänge und ein Rückwärtsgang realisierbar sind, wobei
- der Antrieb durch die Antriebswelle (1) erfolgt, welche ständig mit einem Element des ersten Planetensatzes (P1) verbunden ist,
- der Abtrieb über die Abtriebswelle (2) erfolgt, welche ständig mit dem Steg des zweiten Planetensatzes (P2) verbunden ist,
- eine dritte Welle (3) ständig mit dem Steg des dritten Planetensatzes (P3) verbunden ist,
- eine vierte Welle (4) ständig mit dem Hohlrad des zweiten Planetensatzes (P2) verbunden ist,
- die dritte Welle (3) durch eine Bremse (03) an das Gehäuse (G) ankoppelbar ist,
**dadurch gekennzeichnet , dass**
- die Abtriebswelle (2) ständig mit dem Hohlrad des dritten Planetensatzes (P3) verbunden ist,
- eine fünfte Welle (5) ständig mit dem Hohlrad des ersten Planetensatzes (P1) verbunden ist,
- eine sechste Welle (6) ständig mit dem Sonnenrad des zweiten Planetensatzes (P2) verbunden ist,
- eine siebte Welle (7) mit dem Sonnenrad des dritten Planetensatzes (P3) verbunden ist,
- ein weiteres Element des ersten Planetensatzes (P1) verdrehfest über eine achte Welle (0) mit dem Gehäuse (G) ständig verbunden ist oder mittels einer weiteren Bremse (00) als ein siebtes Schaltelement mit dem Gehäuse (G) lösbar verbunden ist,
- eine erste Kupplung (13) die Antriebswelle (1) und die dritte Welle (3) lösbar miteinander verbindet,
- eine zweite Kupplung (36) die dritte Welle (3) und die sechste Welle (6) lösbar miteinander verbindet,
- eine dritte Kupplung (45) die vierte Welle (4) und die fünfte Welle (5) lösbar miteinander verbindet,
- eine vierte Kupplung (47) die vierte Welle (4) und die siebte Welle (7) lösbar miteinander verbindet,
- eine fünfte Kupplung (67) die sechste Welle (6) und die siebte Welle (7) lösbar miteinander verbindet.

2. Mehrstufengetriebe nach Anspruch 1, **dadurch gekennzeichnet,**
- **dass** die Antriebswelle (1) ständig mit dem Sonnenrad des ersten Planetensatzes (P1) verbunden ist und
- **dass** der Steg des ersten Planetensatzes (P1) mit dem Gehäuse (G) ständig verbunden ist oder mittels der weiteren Bremse (00) mit dem Gehäuse (G) lösbar verbunden ist.

3. Mehrstufengetriebe nach Anspruch 1, **dadurch gekennzeichnet,**
- **dass** die Antriebswelle (1) ständig mit dem Steg des ersten Planetensatzes (P1) verbunden ist und
- **dass** das Sonnenrad des ersten Planetensatzes (P1) mit dem Gehäuse (G) ständig verbunden ist oder mittels der weiteren Bremse (00) mit dem Gehäuse (G) lösbar verbunden ist.

4. Mehrstufengetriebe nach einem der Ansprüche 1 bis 3, **dadurch gekennzeichnet, dass** der zweite Planetensatz (P2) und der dritte Planetensatz (P3) als Minus-Planetensätze ausgebildet sind und dass der erste Planetensatz (P1) als Plus-Planetensatz ausgebildet ist.

5. Mehrstufengetriebe nach einem der vorstehenden Ansprüche, **dadurch gekennzeichnet , dass** Antrieb und Abtrieb auf der gleichen Seite des Gehäuses (G) vorgesehen sind.

6. Mehrstufengetriebe nach einem der vorstehenden Ansprüche, **dadurch gekennzeichnet , dass** ein Anfahren mittels eines der Schaltelemente (00, 03, 13, 36, 45, 47, 67) des Getriebes erfolgt.

7. Mehrstufengetriebe nach Anspruch 6, **dadurch gekennzeichnet , dass** als Schaltelement für das Anfahren die dritte Kupplung (45) oder die Bremse (03) eingesetzt ist.

## Claims

1. Multistep gear mechanism of planetary design, in particular an automatic gearbox for a motor vehicle, comprising
- a drive shaft (1) and an output shaft (2) which are arranged in a housing (G),
- three single-web planetary sets (P1, P2, P3),
- at least five further rotatable shafts (3, 4, 5, 6, 7),
- and at least six shifting elements (00, 03, 13, 36, 45, 47, 67), comprising at least one brake (00, 03) and clutches (13, 36, 45, 47, 67),
the selective engagement of which brings about different transmission ratios between the drive shaft (1) and the output shaft (2), with the result that seven forward gears and one reverse gear can be realized,
- the drive taking place by way of the drive shaft (1) which is connected permanently to an element of the first planetary set (P1),
- the output taking place via the output shaft (2) which is connected permanently to the web of the second planetary set (P2),
- a third shaft (3) being connected permanently to the web of the third planetary set (P3),
- a fourth shaft (4) being connected permanently to the internal gear of the second planetary set (P2),
- it being possible for the third shaft (3) to be coupled to the housing (G) by way of a brake (03),
**characterized in that**
- the output shaft (2) is connected permanently to the internal gear of the third planetary set (P3),
- a fifth shaft (5) is connected permanently to the internal gear of the first planetary set (P1),
- a sixth shaft (6) is connected permanently to the sun gear of the second planetary set (P2),
- a seventh shaft (7) is connected to the sun gear of the third planetary set (P3),
- a further element of the first planetary set (P1) is connected permanently in a rotationally fixed manner via an eighth shaft (0) to the housing (G) or is connected releasably to the housing (G) by means of a further brake (00) as a seventh shifting element,
- a first clutch (13) connects the drive shaft (1) and the third shaft (3) releasably to one another,
- a second clutch (36) connects the third shaft (3) and the sixth shaft (6) releasably to one another,
- a third clutch (45) connects the fourth shaft (4) and the fifth shaft (5) releasably to one another,
- a fourth clutch (47) connects the fourth shaft (4) and the seventh shaft (7) releasably to one another, and
- a fifth clutch (67) connects the sixth shaft (6) and the seventh shaft (7) releasably to one another.

2. Multistep gear mechanism according to Claim 1, **characterized**
- **in that** the drive shaft (1) is connected permanently to the sun gear of the first planetary set (P1), and
- **in that** the web of the first planetary set (P1) is connected permanently to the housing (G) or is connected releasably to the housing (G) by means of the further brake (00).

3. Multistep gear mechanism according to Claim 1, **characterized**
- **in that** the drive shaft (1) is connected permanently to the web of the first planetary set (P1), and
- **in that** the sun gear of the first planetary set (P1) is connected permanently to the housing (G) or is connected releasably to the housing (G) by means of the further brake (00).

4. Multistep gear mechanism according to one of Claims 1 to 3, **characterized in that** the second planetary set (P2) and the third planetary set (P3) are configured as minus planetary sets, and **in that** the first planetary set (P1) is configured as a plus planetary set.

5. Multistep gear mechanism according to one of the preceding claims, **characterized in that** the drive and output are provided on the same side of the housing (G).

6. Multistep gear mechanism according to one of the preceding claims, **characterized in that** starting takes place by means of one of the shifting elements (00, 03, 13, 36, 45, 47, 67) of the gear mechanism.

7. Multistep gear mechanism according to Claim 6, **characterized in that** the third clutch (45) or the brake (03) is used as shifting element for starting.

## Revendications

1. Boîte de vitesses à plusieurs étages de construction planétaire, en particulier boîte de vitesses automatique pour un véhicule automobile, comprenant
- un arbre d'entraînement (1) et un arbre de sortie (2), lesquels sont disposés dans un boîtier (G),
- trois trains planétaires à un porte-satellites (P1, P2, P3),
- au moins cinq arbres rotatifs supplémentaires (3, 4, 5, 6, 7)
- ainsi qu'au moins six éléments de commutation (00, 03, 13, 36, 45, 47, 67), comprenant au moins un frein (00, 03) et des embrayages (13, 36, 45, 47, 67),
dont l'engagement sélectif provoque différents rapports de transmission entre l'arbre d'entraînement (1) et l'arbre de sortie (2), de telle sorte que sept vitesses de marche avant et une vitesse de marche arrière puissent être réalisées,
- l'entraînement s'effectuant par le biais de l'arbre d'entraînement (1), qui est relié de manière permanente à un élément du premier train planétaire (P1),
- la prise de force s'effectuant par le biais de l'arbre de sortie (2), qui est relié de manière permanente au porte-satellites du deuxième train planétaire (P2),
- un troisième arbre (3) étant relié de manière permanente au porte-satellites du troisième train planétaire (P3),
- un quatrième arbre (4) étant relié de manière permanente à la couronne dentée du deuxième train planétaire (P2),
- le troisième arbre (3) pouvant être accouplé au boîtier (G) par le biais d'un frein (03),
**caractérisée en ce que**
- l'arbre de sortie (2) est relié de manière permanente à la couronne dentée du troisième train planétaire (P3),
- un cinquième arbre (5) est relié de manière permanente à la couronne dentée du premier train planétaire (P1),
- un sixième arbre (6) est relié de manière permanente à la roue solaire du deuxième train planétaire (P2),
- un septième arbre (7) est relié à la roue solaire du troisième train planétaire (P3),
- un élément supplémentaire du premier train planétaire (P1) est relié de manière permanente et solidaire en rotation au boîtier (G) par le biais d'un huitième arbre (0) ou est relié au boîtier (G) de manière détachable au moyen d'un frein supplémentaire (00) en tant que septième élément de commutation,
- un premier embrayage (13) relie l'un à l'autre l'arbre d'entraînement (1) et le troisième arbre (3) de manière détachable,
- un deuxième embrayage (36) relie l'un à l'autre le troisième arbre (3) et le sixième arbre (6) de manière détachable,
- un troisième embrayage (45) relie l'un à l'autre le quatrième arbre (4) et le cinquième arbre (5) de manière détachable,
- un quatrième embrayage (47) relie l'un à l'autre le quatrième arbre (4) et le septième arbre (7) de manière détachable,
- un cinquième embrayage (67) relie l'un à l'autre le sixième arbre (6) et le septième arbre (7) de manière détachable.

2. Boîte de vitesses à plusieurs étages selon la revendication 1, **caractérisée en ce que**
- l'arbre d'entraînement (1) est relié de manière permanente à la roue solaire du premier train planétaire (P1) et
- le porte-satellites du premier train planétaire (P1) est relié de manière permanente au boîtier (G) ou est relié de manière détachable au boîtier (G) au moyen du frein supplémentaire (00).

3. Boîte de vitesses à plusieurs étages selon la revendication 1, **caractérisée en ce que**
- l'arbre d'entraînement (1) est relié de manière permanente au porte-satellites du premier train planétaire (P1) et
- la roue solaire du premier train planétaire (P1) est reliée de manière permanente au boîtier (G) ou est reliée de manière détachable au boîtier (G) au moyen du frein supplémentaire (00).

4. Boîte de vitesses à plusieurs étages selon l'une quelconque des revendications 1 à 3, **caractérisée en ce que** le deuxième train planétaire (P2) et le troisième train planétaire (P3) sont réalisés sous forme de trains planétaires négatifs et **en ce que** le premier train planétaire (P1) est réalisé Sous forme de train planétaire positif.

5. Boîte de vitesses à plusieurs étages selon l'une quelconque des revendications précédentes, **caractérisée en ce que** l'entraînement et la prise de force sont prévus du même côté du boîtier (G).

6. Boîte de vitesses à plusieurs étages selon l'une quelconque des revendications précédentes, **caractérisée en ce qu'**un démarrage a lieu au moyen de l'un des éléments de commutation (00, 03, 13, 36, 45, 47, 67) de la boîte de vitesses.

7. Boîte de vitesses à plusieurs étages selon la revendication 6, **caractérisée en ce que** l'on utilise en tant qu'élément de commutation pour le démarrage le troisième embrayage (45) ou le frein (03).
